# EUROPEAN PATENT APPLICATION

(11) **EP 3 780 779 A1**
(43) Date of publication of application: **17.02.2021**
(21) Application number: 18913347.3
(22) Date of filing: 05.04.2018
(51) Int. Cl.: H04W 52/28, H04W 52/10

(54) **USER DEVICE AND BASE STATION DEVICE**

(71) Applicant: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP); IIZASA, Naoto, Tokyo 100-6150 (JP); HARADA, Hiroki, Tokyo 100-6150 (JP)
(74) Representative: Hoffmann Eitle
(86) International application number: PCT/JP2018/014640
(87) International publication number: WO 2019/193729

(57) **Abstract**

User equipment includes a receiving unit that obtains information on preamble received target power from base station apparatus, and a controlling unit that changes a setting range of the preamble received target power, in which a plurality of power values is configured, to determine preamble transmission power on a basis of the information on preamble received target power and the changed setting range.

## Description

### TECHNICAL FIELD

The present invention relates to user equipment and base station apparatus in a wireless communication system.

### BACKGROUND ART

In 3GPP (3rd Generation Partnership Project), the wireless communication systems called 5G or NR (New Radio), (which are hereinafter referred to as 5G or NR), have been developed for achievement of larger system capacities, higher data transmission rates, and lower delay in a radio section, etc. For 5G, various wireless communication technologies have been discussed in order to meet requirements in which delay in the radio section is 1 ms or less as well as achieving the throughput of 10Gbps or more.

In NR, radio communications employing millimeter waves are considered and are assumed to cover a wide range of frequencies up to a higher frequency band than that in LTE. For the high frequency band, since transmission loss is particularly increased, beamforming with narrow beam width is applied in order to compensate such path loss (see, e.g., Non-Patent Document 1).

### Prior Art Document

### [NON-PATENT DOCUMENT]

Non-Patent Document 1: 3GPP TS 38.211 V15.0.0 (2017-12)

### SUMMARY OF THE INVENTION

### [PROBLEM TO BE SOLVED BY THE INVENTION]

When an initial access is performed in NR, a setting range of parameters for power control required for the initial access may be expanded since the access covers a wide frequency band.

In view of the point described above, an object of the present invention is to properly set parameters for power control required for the initial access.

### [MEANS FOR SOLVING PROBLEM]

According to disclosed techniques, user equipment is provided, including: a receiving unit that obtains information on preamble received target power from a base station apparatus; a controlling unit that changes a setting range of preamble received target power, in which a plurality of power values is configured, to determine preamble transmission power on a basis of the information on preamble received target power and the changed setting range; and a transmitting unit that transmits a preamble to the base station apparatus with the determined preamble transmission power.

### [ADVANTAGE OF THE INVENTION]

According to the disclosed techniques, it is possible to properly set the parameters for power control required for the initial access.

### BRIEF DESCRIPTION OF DRAWINGS

Fig. 1 is a diagram illustrating a configuration example (1) of a wireless communication system according to an embodiment of the present invention;
Fig. 2 is a diagram illustrating a configuration example (2) of the wireless communication system according to an embodiment of the present invention;
Fig. 3 is a flowchart illustrating an example of a random access procedure according to the embodiment of the present invention;
Fig. 4 is a diagram illustrating an example of a functional configuration of base station apparatus 100 according to the embodiment of the present invention;
Fig. 5 is a diagram illustrating an example of a functional configuration of user equipment 200 according to the embodiment of the present invention; and
Fig. 6 is a diagram illustrating an example of a hardware configuration of the base station apparatus 100 or the user equipment 200 according to the embodiment of the present invention.

### [EMBODIMENTS OF THE INVENTION]

In the following, embodiments of the present invention are described with reference to the drawings. It is noted that the embodiments described below are merely an example, and embodiments for which the present invention applies is not limited to the embodiments below.

In operating a wireless communication system according to the embodiment of the present invention, existing techniques are used as appropriate. The existing techniques contain, for example, existing LTE, but are not limited thereto. The term "LTE" used in the specification broadly means LTE-Advanced, and systems (e.g., NR or 5G) used after LTE-Advanced, unless otherwise stated.

In the embodiment of the present invention to be described below, the terms used in the existing LTE, such as SS (Synchronization Signal), PSS (Primary SS), SSS (Secondary SS), PBCH (Physical broadcast channel), PRACH (Physical RACH), are used for ease of description.
However, similar signals, functions and the like to these terms may be referred to by other terms.

In the embodiment of the present embodiment, a duplex system may be TDD (Time Division Duplex) system, FDD (Frequency Division Duplex) system, or other systems (e.g., Frequency Duplex, etc.).

Also, in the following description, in transmitting a signal by using a transmission beam, a signal multiplied by a pre-coding vector (pre-coded with a pre-coding vector) may be transmitted. Similarly, in receiving a signal by using receiving beam, a reception beam may be multiplied by a predetermined weight vector. Further, in transmitting a signal by using a transmission beam, the signal may be transmitted from a specific antenna port. Similarly, in receiving a signal by using a reception beam, the signal may be received from a specific antenna port. The antenna port is referred to as a logical antenna port or a physical antenna port, which is defined by 3GPP standard.

It is noted that a method of forming the transmitting beam or the receiving beam is not limited to the above method. For example, in the base station apparatus 100 or user equipment 200, each of which is provided with a plurality of antennas, a method of changing the respective antenna angles may be implemented, or a method of combining a method of using a pre-coding vector with the method of changing the antenna angles may be implemented. Alternatively, switching different antenna panels may be implemented, a method of using a combination of multiple antenna panels may be implemented, or alternatively, other methods may be implemented. Also, for example, in a high-frequency band, multiple transmission beams that are different from each other may be used. Using the multiple transmission beams is referred to as multi-beam-operation and using a single transmission beam is referred to as single-beam-operation.

In the embodiment of the present invention, in "configuring" a radio parameter or so forth, a predetermined value may be pre-configured, or a radio parameter notified by the base station apparatus 100 or the user equipment 200 may be configured.

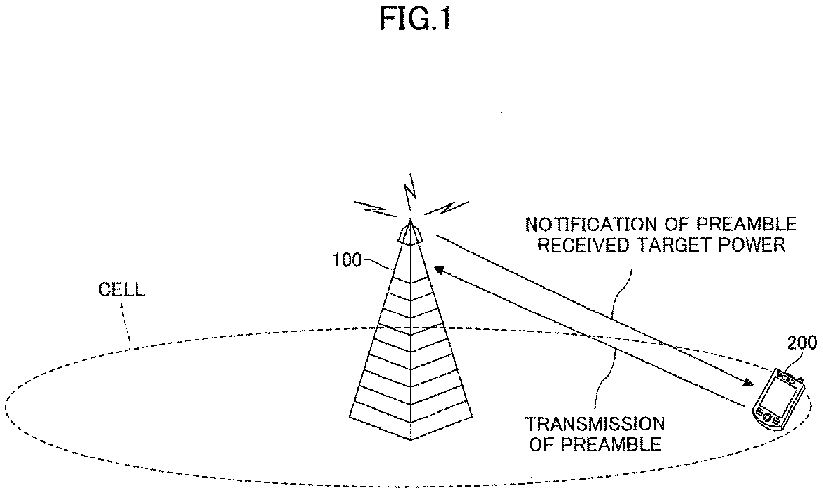

Fig. 1 is a diagram illustrating a configuration example (1) of a wireless communication system according to the embodiment of the present invention. The wireless communication system according to the embodiment of the present invention includes a base station apparatus 100 and user equipment 200 as illustrated in FIG. 1. In FIG. 1, the base station apparatus 100 and the user equipment 200 are respectively represented singly. However, this is an example, and they may be multiple.

The base station apparatus 100 provides one or more cells and is a communication apparatus that performs wireless communication. The base station apparatus 100 transmits synchronizing signals and system information to the user equipment 200. The synchronizing signals are, for example, NR-PSS and NR-SSS. The system information is transmitted via, for example, NR-PBCH. The system information is referred to as notification information. Also, the base station apparatus 100 transmits application data via NR-PDSCH (Physical downlink shared channel), which is scheduled by NR-PDCCH (Physical downlink shared channel), to the user equipment 200. The base station apparatus 100 and the user equipment 200 can transmit and receive signals to which beamforming applies. The user equipment 200 is a communication module conforming to NB-IoT or category M. The user equipment 200 is a smart phone, a mobile phone, a tablet, a wearable terminal, or a communication apparatus provided with a wireless communication function, such as a communication module for M2M (Machine-to-Machine). The user equipment 200 wirelessly connects to the base station apparatus 100 and utilizes various communication services provided by the wireless communication system.

In an initial access phase, as illustrated in FIG. 1, the user equipment 200 transmits a preamble signal of a random access to the base station apparatus 100. The random access is performed on a basis of system information received on a PDSCH (physical downlink shared channel) from the base station apparatus 100, in addition to system information from a PBCH. The information obtained from the base station apparatus 100 includes information indicating preamble received target power. The user equipment 200 also performs uplink (UL) transmission on the basis of UL (Uplink) scheduling received from the base station apparatus 100.

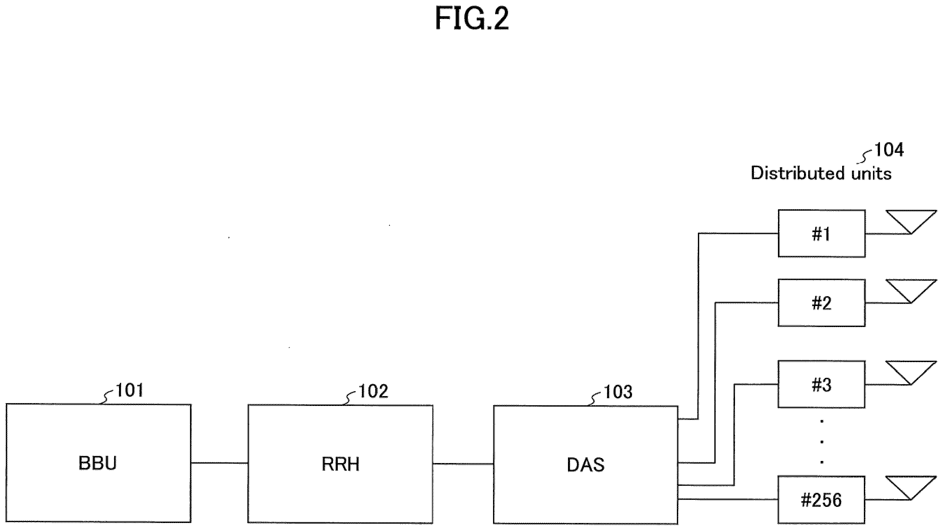

Fig. 2 is a diagram illustrating a configuration example (2) of the wireless communication system according to the embodiment of the present invention. In FIG. 2, the apparatus configuration that constitutes the base station apparatus 100 will be explained. The base station apparatus 100 includes a BBU (Baseband Unit) 101, a RRH (Remote Radio Head) 102, a DAS (Distributed Antenna System) 103, and antenna units (Distributed units) 104.

The BBU 101 is a baseband unit, and performs processing of baseband signals received via the RRH 102, the DAS 103, and the antenna units 104. The RRH 102 is an apparatus that performs processing of a radio unit. The RRH 102 and the BBU 101 may be connected via an optical cable, for example. The DAS 103 is a system that has the distributed multiple antenna units 104. The DAS 103 can enhance coverage by using the multiple antenna units 104, such as 256 antennas as illustrated in FIG. 2.

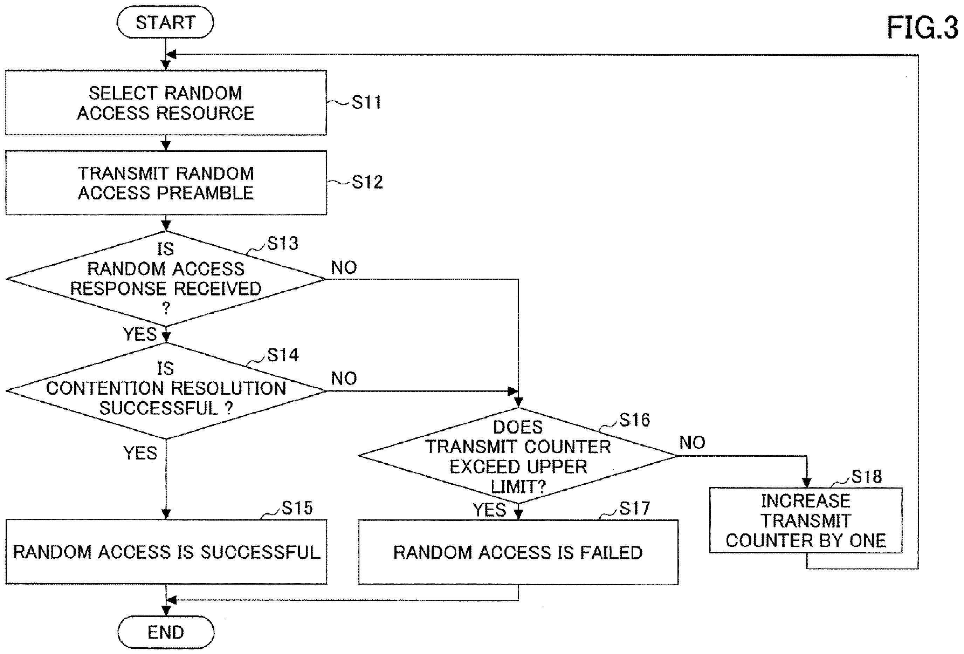

Fig. 3 is a flowchart illustrating an example of a random access procedure according to the embodiment of the present invention. The base station apparatus 100 transmits the PSS, the SSS, and the PBCH to the user equipment 200. The PBCH includes some of the system information. It is noted that, at the start of the random access procedure, a transmit counter is set to "1".

In step S11, the user equipment 200 selects a resource employed for the random access on a basis of resources for performing the random access procedure, i.e., RACH resources identified from the frequency domain and the time domain, and information for identifying a preamble format, etc. Next, the user equipment 200 performs power ramping processing on the basis of preamble received target power notified by the base station apparatus 100, and the transmit counter, and determines a transmission power of a random access preamble. Further, the user equipment 200 transmits the random access preamble to the base station apparatus 100 by using the selected resource (S12). Detailed procedure of determining the transmission power of the random access preamble is described below.

In step S13, the base station apparatus 100 transmits a random access response to the user equipment 200. The random access response is a response to the random access preamble. The random access response is transmitted with a RA-RNTI (Random Access-Radio Network Temporary Identifier) destination on the PDCCH. The random access response includes at least a random access preamble identifier, timing alignment, initial uplink grant, and a temporary C-RNTI (Cell-Radio Network Temporary Identifier). If the random access response is received by the user equipment 200 (YES in S13), the procedure proceeds to step S14 and if the random access response is not received by the user equipment 200 (NO in S13), the procedure proceeds to step S16.

In step S14, the user equipment 200 performs uplink transmission on a basis of the uplink grant included in the random access response. In the uplink transmission, at least an RRC (Radio Resource Control) connection request, and a NAS (Non-Access Stratum) UE (User Equipment) identifier are transmitted. Next, control information for RRC connection establishment and the predetermined MAC (Medium Access Control) control element transmitted by the user equipment 200 in S14 are transmitted with a temporary C-RNTI destination on the PDCCH from the base station apparatus 100 to the user equipment 200. The MAC control element is used for contention resolution. It is noted that the contention resolution (step S14) is implemented if a contention-type random access procedure is performed, but the contention resolution is not required to be implemented if a non-contention-type random access procedure is performed. If the MAC control element matches some or all of data transmitted in step S14 (YES in S14), the user equipment 200 proceeds to step S15 and if the element does not match, the user equipment 200 proceeds to step S16.

In step S15, the user equipment 200 determines that the random access is successful, considers the temporary C-RNTI as the C-RNTI, and finishes the random access procedure.

In step S16, the user equipment 200 determines whether a transmit counter is indicated, or exceeds the predefined upper limit. If the upper limit is exceeded (YES in S16), the procedure proceeds to step S17 and if the upper limit is not exceeded (NO in S16), the procedure proceeds to step S18.

In step S17, the user equipment 200 determines that the random access has failed, and finishes the random access procedure. On the other hand, in step S18, the user equipment 200 increases the transmit counter by one, returns to step S11 in order to retransmit the random access preamble, and again selects the random access resource.

In NR, the transmission power P_{PRACH,f,c}(i) of the random access preamble is calculated according to the formula below:
P_{PRACH,f,c}(i) =min{P_{CMAX,f,c}(i), P_{PRACH, target} +PL _{f,c}}
f: carrier f
C: serving cell c
i: transmission section i
P_{CMAX,f,c}: maximum transmit power for carrier f and serving cell c
P_{PRACH,target}: target received power in base station apparatus 100
PL_{f,c}: path loss for carrier f and serving cell c

P_{PRACH,target,} i.e., the preamble received target power is configured by the base station apparatus 100 on a basis of a predetermined quality, and is notified to the user equipment 200. Such a notification may be performed through information element "preamble Received Target Power".

In LTE, the setting range of the parameter "preamble Initial Received Target Power", which corresponds to "preamble Received Target Power", is defined from -120 dBm from -90 dBm.

On the other hand, in NR, expanding the setting range of "preamble Received Target Power" is planned, by taking various scenarios into account. For example, the setting range of "preamble Received Target Power" is assumed to be set to low received power, such as -196 dBm, compared to LTE. This is because the preamble received target power is configured with "preamble Received Target Power", including DL-UL coupling loss in using SUS (Supplemental UL) as one of NR scenarios, i.e., a compensation amount of differences in quality due to the different frequencies. It is noted that the SUL is referred to as a UL resource, which is provided separately from a normal UL for improvement in UL coverage.

As illustrated in FIG. 2, since radio signals received at the antenna units 104 are processed via the DAS 103, the RRH 102, and the BBU 101, NF (Noise Figure) may be increased. In order to receive the PRACH that meets the predetermined quality in the base station apparatus 100, for example, the preamble received target power needs to be set to high received power, such as -60 dBm.

Thus, when use cases for NR are taken into account, the setting range of preamble received target power as required is expanded. For this reason, it is assumed that the number of bits for signaling to the user equipment 200 the preamble received target power is increased. Also, in a case where parameters indicating different preamble received target power are defined for each use case, it is assumed that the number of bits for signaling to the user equipment 200 such power is increased as well.

In a case where, without increasing the upper limit value of the setting range of preamble received target power, the setting range is limited, and predetermined PRACH quality is met by use of the power ramping processing performed in retransmitting the PRACH, connection delay is assumed to occur, by retransmitting the PRACH.

Hereafter, explanation will be provided for a method for configuring the setting range of preamble received target power, which is required for the various use cases, without increasing the number of bits required for a notification of the preamble received target power.

For example, a step size of the setting range (value range) of preamble received target power, in which a plurality of power values is configured, may be increased. The step size may be changed with respect to a part of the setting range of preamble received target power, or be changed with respect to all of the setting range of preamble received target power.

In addition, information, which indicates a range of the step size to be changed within the setting range of preamble received target power, may be notified to the user equipment 200 by the base station apparatus 100. The information indicating the range to be changed may include an index indicating a first value for changing the step size or a first value, an applied step size, and an index indicating the last value for changing the step size or the last value. The first value may be a minimum received power value within the range to be changed. The last value may be a maximum received power value within the range to be changed.

A scaling coefficient may be notified to the user equipment 200 by the base station apparatus 100. The user equipment 200 may change the step size of the setting range of preamble received target power on a basis of the notified scaling coefficient.

It is noted that, the aforementioned change of the step size with respect to the setting range of preamble received target power may be applied in only a particular case. For example, the change of the step size may be applied in a case where the user equipment 200 is configured via notification information from a network, or dedicated signaling. Alternatively, the change of the step size may be applied in a case where PRACH transmission is performed over the SUL or non-SUL (Normal UL, Legacy UL).

For example, a range to be referred to within the setting range of preamble received target power may be changed according to a type of UL for transmitting the PRACH. The type of UL is the SUL or the non-SUL, for example.

The setting range of preamble received target power is individually defined with respect to the SUL and the non-SUL, and further the setting range of preamble received target power to be referred to may be switched according to the UL for transmitting the preamble. In both cases where the preamble is transmitted over the SUL and where the preamble is transmitted over the non-SUL, the setting range of preamble received target power suitable for UL can be defined. The user equipment 200 may autonomously switch the setting range according to the SUL or the non-SUL. The user equipment 200 may switch the setting range on a basis of an instruction from the network. Alternatively, the user equipment 200 may switch the setting range on a basis of DL or UL quality, such as path loss, a SINR (Signal-to-interference noise ratio), RSRP (Reference Signal Received Power), or RSRQ (Reference Signal Received Quality).

For example, with respect to the setting range of existing preamble received target power, an offset may be applied according to the UL for transmitting the preamble. By applying the offset, the setting ranges of preamble received target power suitable for the respective use cases can be defined, and an increase in number of bits required for signaling can be avoided. Further, by changing the offset applied to the SUL and the offset applied to the non-SUL, the entire setting range applied to each UL can be shifted.

For example, in transmitting the preamble over the SUL, the user equipment 200 sets the offset to zero, or does not apply the offset. In transmitting the preamble over the non-SUL, the user equipment 200 may refer to the setting range of preamble received target power to which the offset applies. It is noted that the offset may be a positive value or a negative value. The offset may be determined on a basis of DL-UL coupling loss assumed for the SUL, or a value obtained by rounding up DL-UL coupling loss by a predetermined unit. For example, the user equipment 200 may calculate the DL-UL coupling loss, determine the offset on a basis of the DL-UL coupling loss, and apply the offset to the setting range of preamble received target power. Alternatively, the network may notify the user equipment 200 of whether the offset is applied or not.

In the above case of switching the setting range of preamble received target power to be referred to according to the UL for transmitting the preamble, or case of switching the offset according to the UL for transmitting the preamble, the setting range of preamble received target power may be changed so that the value of the preamble transmission power for SUL can be lower than that of the preamble transmission power for non-SUL.

In the above case of switching the setting range of preamble received target power to be referred to according to the UL for transmitting the preamble, or case of switching the offset according to the UL for transmitting the preamble, the user equipment 200 may autonomously switch the setting range according to the SUL or the non-SUL, or switch the setting range on a basis of DL or UL quality, such as path loss, SINR, RSRP, or RSRQ. Alternatively, in such a case, the user equipment 200 may switch the setting range on a basis of a magnitude of the DL-UL coupling loss, or switch the setting range on a basis of frequencies of DL and UL, or a combination of the frequencies.

It is noted that, instead of the type of UL determined above, a type of DL may be used. In a case of TDD, the setting range of preamble received target power to be referred to may be switched according to the type of DL, or alternatively, the offset may be switched accordingly.

In the embodiment described above, the setting range of preamble received target power to be referred to is changed according to the SUL or the non-SUL. However, a switching trigger may be any parameter or use case in which the setting range of preamble received target power may be potentially changed. For example, the parameter(s) for the PRACH may be changed, or the parameter(s) for other channels may be changed.

Also, whether the aforementioned change of the setting range of preamble received target power is performed or not may be determined on a basis of whether the SUL applies to the network.

In the embodiment described above, with respect to the step size applied to the setting range of preamble received target power, a lower limit of the power value of the setting range may be increased up to a predetermined value, or an upper limit of the power value of the setting range may be increased up to a predetermined value. Alternatively, a middle portion of the setting range excluding the upper limit and the lower limit may be expanded. It is noted that the setting range of preamble received target power, to which change of the step size applies, may be the setting range of preamble received target power defined in LTE.

It is noted that the non-SUL may be referred to as Normal UL, or Legacy UL.

According to the aforementioned embodiment example, the user equipment 200 obtains the information on preamble received target power from the base station apparatus 100, and changes the setting range of preamble received target power as needed whereby it is possible to properly control the transmission power of the random access preamble to be transmitted when the initial access is performed.

That is, it is possible to properly configure the parameter(s) for the power control required for the initial access.

### [Configuration of Equipment]

Next, explanation will be provided for functional configurations of the base station apparatus 100 and user equipment 200, which execute the processing and operation described above. The base station apparatus 100 and the user equipment 200 include the functions for implementing the above embodiment. However, base station apparatus 100 and user equipment 200 may respectively comprise a portion of the functions described in the embodiment.

### <Base Station Apparatus 100>

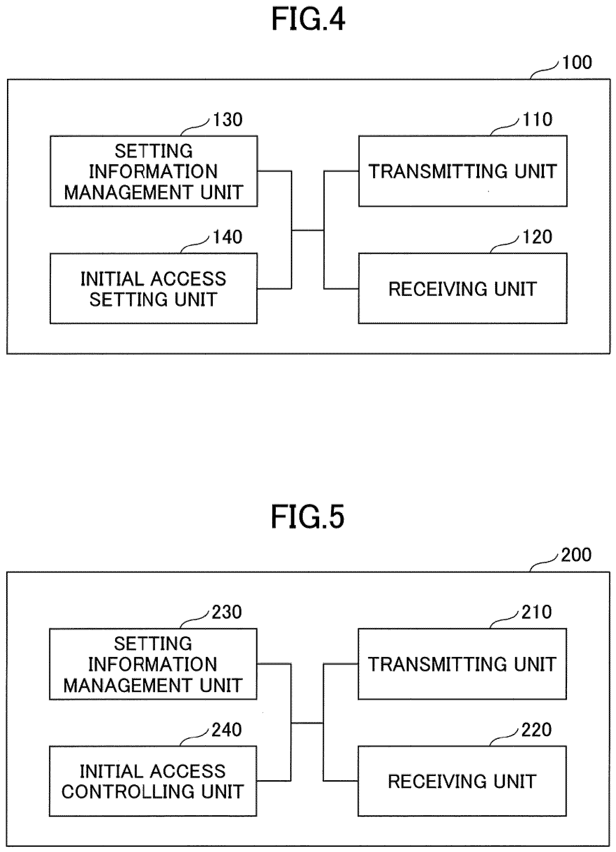

Fig. 4 is a diagram illustrating an example of a functional configuration of the base station apparatus 100. As illustrated in FIG. 4, the base station apparatus 100 has a transmitting unit 110, a receiving unit 120, a setting information management unit 130, and an initial access setting unit 140. The functional configuration illustrated in FIG. 4 is merely an example. Any name may be used for functional sections and functional units as long as the operation according to the embodiment of the present invention can be executed.

The transmitting unit 110 includes a function of generating signals to be transmitted to the user equipment 200-side to transmit the signals by wireless. The receiving unit 120 includes a function of receiving various types of signal transmitted from the user equipment 200 to obtain, for example, information on a higher layer from the received signal. Also, the transmitting unit 110 has a function of transmitting NR-PSS, NR-SSS, NR-PBCH and DL/UL control signals, and so forth to the user equipment 200. Further, for example, the transmitting unit 110 has a function of transmitting notification information including information to be used for the initial access, or UL scheduling to the user equipment 200. The receiving unit 120 has a function of receiving the RACH preamble from the user equipment 200.

The setting information management unit 130 stores preset setting information, and various types of setting information to be transmitted to the user equipment 200. The content of the setting information is, for example, information on the control parameter(s) for initial access, or so forth.

As described in the embodiment example, the initial access setting unit 140 notifies the user equipment 200 of the information used for the initial access, and performs processing in receiving the random access preamble to be transmitted by the user equipment 200, and performs transmission of the random access response, etc.

### <User Equipment 200>

Fig. 5 is a diagram illustrating an example of a functional configuration of the user equipment 200. As illustrated in FIG. 5, the user equipment 200 has a transmitting unit 210, a receiving unit 220, a setting information management unit 230, and an initial access controlling unit 240. The functional configuration illustrated in FIG. 5 is merely an example. Any name may be used for functional sections and functional units as long as the operation according to the embodiment of the present invention can be executed.

The transmitting unit 210 generates a transmission signal from transmission data to transmit the transmission signal by wireless. The receiving unit 220 wirelessly receives various types of signal to obtain a higher-layer signal from a received physical-layer signal. Also, the receiving unit 220 has a function of receiving NR-PSS, NR-SSS, NR-PBCH and DL/UL control signals, and so forth that are transmitted by the base station apparatus 100. Further, for example, the transmitting unit 210 has a function of transmitting NR-PRACH, NR-PUSCH, or so forth to the base station apparatus 100.

The setting information management unit 230 stores various types of setting information received from the base station apparatus 100 or the user equipment 200 by the receiving unit 220. Further, the setting information management unit 230 stores preset setting information. The content of the setting information is, for example, information on the control parameter(s) of the initial access, or so forth.

As described in the embodiment example, the initial access controlling unit 240 generates the preamble and message for the initial access, which are to be transmitted from the user equipment 200 to the base station apparatus 100. Also, the initial access controlling unit 240 controls the preamble transmission power for the initial access on a basis of the control parameter(s) for the initial access, which are received from the base station apparatus 100. The transmitting unit 210 may include a functional unit relating to the transmission of signals available to the initial access controlling unit 240. The receiving unit 220 may include a functional unit relating to the reception of signals available to the initial access controlling unit 240.

### <Hardware Configuration>

The above diagrams (FIGs.4 and 5) illustrating the functional configures used in the embodiment of the present invention indicate blocks per functional unit. These functional blocks (configuration units) are implemented by any combination of hardware and/or software. Also, means for implementing these functional blocks is not particularly limited. That is, each functional block may be implemented by one device in which multiple components are physically and/or logically coupled, or be implemented by two or more devices that are physically and/or logically separated from each other and are connected directly and/or indirectly (for example, in a wired manner and/or wirelessly).

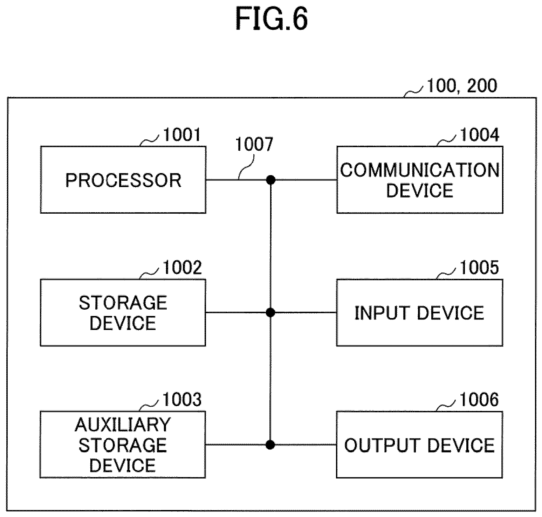

For example, the base station apparatus 100 and the user equipment 200 according to one embodiment of the present invention may function as a computer that performs processing according to the embodiment of the present invention. Fig. 6 is a block diagram illustrating an example of the hardware configuration of a wireless communication device that is the base station apparatus 100 or the user equipment 200 according to the embodiment of the present invention. Each of the above base station apparatus 100 and user equipment 200 may be physically configured as a computer device including, a processor 1001, a storage device 1002, an auxiliary storage device 1003, a communication device 1004, an input device 1005, an output device 1006, a bus 1007, and so forth.

It is noted that, in the following description, the term "device" can be replaced with a circuit, an apparatus, a unit, or so forth. The hardware configurations of the base station apparatus 100 and the user equipment 200 may include one or more of the respective devices that are represented by 1001 through 1006 of the figure, or may not include a part of the devices.

Each function of the base station apparatus 100 and the user equipment 200 may be implemented by the following processes: a predetermined software (program) is read onto hardware such as the processor 1001 or the storage apparatus 1002 and the processor 1001 performs operation, and controls communication by the communication device 1004, and the reading and/or writing of data in the storage apparatus 1002 and the auxiliary storage apparatus 1003.

The processor 1001 runs, for example, an operating system to control the overall operation of the computer. The processor 1001 may be a central processing unit (CPU) including an interface with peripheral apparatus, a control apparatus, an arithmetic apparatus, a register and so forth.

The processor 1001 reads a program (program code), a software module, or data from the auxiliary storage device 1003 and/or the communication device 1004 to the storage device 1002, and performs various types of process according to the program, the software module, or the data. A program that causes the computer to perform at least some of the operations described in the embodiment is used as the program. For example, the transmitting unit 110, the receiving unit 120, the setting information management unit 130, and the initial access setting unit 140 of the base station apparatus 100, as illustrated in FIG. 4, are stored in the storage device 1002, and these may be implemented by a control program executed by the processor 1001. Also, for example, the transmitting unit 210, the receiving unit 220, the setting information management unit 230, and the initial access controlling unit 240 of the user equipment 200, as illustrated in FIG. 5, are stored in the storage device 1002, and these may be implemented by a control program executed by the processor 1001. Explanation has been provided above for the case that the above various processes are performed by one processor 1001. However, such processes may be simultaneously or sequentially performed by two or more processors 1001. The processor 1001 may be mounted with one or more chips. It is noted that the program may be transmitted from the network through an electric communication line.

The storage device 1002 is a computer-readable recording medium and may include at least one of, for example, a ROM (Read Only Memory), an EPROM (Erasable Programmable ROM), an EEPROM (Electrically Erasable Programmable ROM), a RAM (Random Access Memory) and so forth. The storage device 1002 may be also referred to as a register, a cache, a main memory (main storage device), or so forth. The storage device 1002 can store a program (program code), a software module and so forth that can be executed to perform the processes according to one embodiment of the present invention.

The auxiliary storage device 1003 is a computer-readable recording medium and may be at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and so forth. The auxiliary storage device 1003 may be referred to as an auxiliary storage device. The above storage medium may be, for example, a database including the storage device 1002 and/or the auxiliary storage device 1003, a server, and other proper media.

The communication device 1004 is hardware (transmitting and receiving device) for communicating with the computer through a wired and/or wireless network and is also referred to as, for example, a network device, a network controller, a network card, a communication module, or so forth. For example, the transmitting unit 110 and the receiving unit 120 of the base station apparatus 100 may be implemented by the communication device 1004. Also, the transmitting unit 210 and the receiving unit 220 of the user equipment 200 may be implemented by the communication device 1004.

The input device 1005 is an input device (for example, a keyboard, a mouse, a microphone, a switch, a button, a sensor or so forth) that receives an input from the outside. The output device 1006 is an output device (for example, a display, a speaker, an LED lamp or so forth) that performs an output to the outside. It is noted that the input device 1005 and the output device 1006 may be integrated with each other (for example, a touch panel).

All devices, such as the processor 1001 and the storage device 1002, are connected to each other via a bus 1007 for information communication. The bus 1007 may be a single bus, or such devices may be connected to each other via different buses.

The base station apparatus 100 and the user equipment 200 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be mounted with at least one of these hardware components.

### [Summary of the Embodiment]

As described above, according to the embodiment of the present invention, user equipment is provided, having: a receiving unit that obtains information on preamble received target power from base station apparatus; a controlling unit that changes a setting range of preamble received target power, in which a plurality of power values are configured, to determine preamble transmission power on a basis of the information on preamble received target power and the changed setting range; and a transmitting unit that transmits a preamble to the base station apparatus with the determined preamble transmission power.

According to the embodiment described above, the user equipment 200 obtains the information on preamble received target power from the base station apparatus 100, and changes the setting range of preamble received target power as needed whereby it is possible to properly control the transmission power of the random access preamble to be transmitted when the initial access is performed. That is, it is possible to properly configure the parameter(s) for the power control required for the initial access.

The controlling unit may increase a step size of power values within the setting range of preamble received target power according to a type of UL for transmitting the preamble. In such a configuration, the user equipment 200 can change the setting range of preamble received target power as needed according to the type of UL.

The controlling unit may switch the setting range of preamble received target power according to a type of UL for transmitting the preamble. In such a configuration, the user equipment 200 can change the setting range of preamble received target power as needed according to the type of UL.

The controlling unit may switch an offset applied to the setting range of preamble received target power according to a type of UL for transmitting the preamble. In such a configuration, the user equipment 200 can change the setting range of preamble received target power as needed according to the type of UL.

The controlling unit may determine the offset on a basis of a value of calculated coupling loss of DL and UL. In such a configuration, the user equipment 200 can change the setting range of preamble received target power as needed according to the calculated coupling loss value.

A base station apparatus is provided, having: a transmitting unit that notifies of information on preamble received target power of user equipment; a notification unit that transmits a notification for changing a setting range of preamble received target power, in which a plurality of power values are configured, to the user equipment; and a receiving unit that receives a preamble transmitted with preamble transmission power that is determined by the user equipment on a basis of the information on preamble received target power and the notification for changing the setting range.

According to the embodiment described above, the user equipment 200 obtains the information on preamble received target power from the base station apparatus 100, and changes the setting range of preamble received target power as needed whereby it is possible to properly control the transmission power of the random access preamble to be transmitted when the initial access is performed. That is, it is possible to properly configure the parameter(s) for the power control required for the initial access.

### [Supplemental Embodiment]

The embodiment example of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for description, but the numerical values are merely examples, and any suitable values may be used unless otherwise stated. The classification of items in the above description is not essential to the present invention, matters described in two or more items may be combined and used as necessary, and a matter described in one item may be applied to a matter described in another item (unless there is a contradiction). The boundary between functional units or processing units in a functional block diagram does not necessarily correspond to the boundary between physical parts. Operations of a plurality of functional units may be performed physically by one component, or an operation of one functional unit may be performed physically by a plurality of parts. In the processing procedures described in the embodiment, the order of processes may be changed as long as there is no inconsistency. For the sake of convenience of description, the base station apparatus 100 and the user equipment 200 have been described using the functional block diagrams, but such equipment may be implemented by hardware, software, or a combination thereof. The software executed by the processor of the base station apparatus 100 according to the embodiment of the present invention, and the software executed by the processor of the user equipment 200 according to the embodiment of the present invention, may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

The notification of information is not limited to the aspect/embodiment described in the specification, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also referred to as an RRC message and may be, for example, an RRC connection setup message, an RRC connection reconfiguration message or so forth.

Each aspect/embodiment described in the specification may be applied to systems using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other proper systems, and/or next-generation systems that are extended on the basis of these systems.

In each aspect/embodiment described in the specification, the order of the processes in the procedure, the sequence, the flowchart and so forth may be changed as long as there is no contraction therebetween. For example, for the method described in the specification, elements of various steps are presented in the illustrative order and are not limited to the presented specific order.

In the specification, in some cases, the specific operation performed by the base station apparatus 100 may be performed by an upper node of the base station apparatus. In a network provided with one or more network nodes having the base station apparatus 100, it is apparent that various operations performed for communication with the user equipment 200 can be performed by another network node (for example, MME or S-GW is considered, but such a network node is not limited thereto) excluding the base station apparatus 100 and/or the user equipment 200. In the aforementioned example, one network node is provided other than the base station apparatus 100. However, a plurality of other network nodes (for example, MME and S-GW) may be combined with each other.

Each aspect/embodiment described in the specification may be used individually or in combination, or be switched according to the implementation thereof.

In some cases, the user equipment 200 is referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other proper terms by those skilled in the art.

In some cases, the base station apparatus 100 is referred to as NB (NodeB), eNB (evolved NodeB), gNB, a base station, or other proper terms by those skilled in the art.

In some cases, the terms "determining" and "determining" used in the specification include various operations. The terms "determining" and "deciding" may include "determination" and "decision", etc. for, e.g., judging, calculating, computing, processing, deriving, investigating, looking up (for example, search in a table, a database or other data structures), and ascertaining operations. Also, the terms "determining" and "deciding" may include "determination" and "decision", etc. for receiving (for example, receiving information), transmitting (for example, transmitting information), input, output, and accessing (for example, accessing data in a memory) operations. Further, the terms "determining" and "deciding" may include "determination" and "decision" for resolving, selecting, choosing, establishing, and comparing operations, etc. That is, the terms "determining" and "deciding" may include "determination" and "decision" for any operation.

The term "on the basis of" used in the specification does not mean "on the basis of only" unless otherwise stated. In other words, the term "on the basis of" means both "on the basis of only" and "on the basis of at least".

The terms "include" and "including" and the modifications thereof are intended to be inclusive, similarly to the term "comprising", as long as they are used in the specification or the claims. In addition, the term "or" used in the specification or the claims is not intended to mean exclusive OR.

The articles, e.g., "a", "an", and "the" given in the present disclosure as a whole in an English translation may include two or more unless such a plural form clearly departs from the context of the present disclosure.

It is noted that the initial access controlling unit 240 is an example of the control unit. The initial access setting unit 140 is an example of the setting unit. The transmitting unit 110 is an example of the transmitting unit and the notification unit.

The present invention has been described above. It will be apparent to those skilled in the art that the present invention is not limited to the embodiment described in the specification. Various modifications and changes of the present invention can be made without departing from the spirit and scope of the present invention which are defined by the claims. Therefore, the specification is illustrative and does not limit the present invention.

### LIST OF REFERENCE SYMBOLS

- 100: BASE STATION APPARATUS
- 101: BBH
- 102: RRH
- 103: DAS
- 104: ANTENNA UNITS
- 110: TRANSMITTING UNIT
- 120: RECEIVING UNIT
- 130: SETTING INFORMATION MANAGEMENT UNIT
- 140: INITIAL ACCESS SETTING UNIT
- 200: USER EQUIPMENT
- 210: TRANSMITTING UNIT
- 220: RECEIVING UNIT
- 230: SETTING INFORMATION MANAGEMENT UNIT
- 240: INITIAL ACCESS CONTROLLING UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. User equipment comprising:
a receiving unit that obtains information on preamble received target power from a base station apparatus;
a controlling unit that changes a setting range of the preamble received target power, in which a plurality of power values is configured, to determine preamble transmission power on a basis of the information on preamble received target power and the changed setting range; and
a transmitting unit that transmits a preamble to the base station apparatus with the determined preamble transmission power.

2. The user equipment according to claim 1,
wherein the controlling unit increases a step size of power values within the setting range of preamble received target power according to a type of UL for transmitting the preamble.

3. The user equipment according to claim 1,
wherein the controlling unit switches the setting range of preamble received target power according to a type of UL for transmitting the preamble.

4. The user equipment according to claim 1,
wherein the controlling unit switches an offset applied to the setting range of preamble received target power according to a type of UL for transmitting the preamble.

5. The user equipment according to claim 4,
wherein the controlling unit determines the offset on a basis of a value of calculated coupling loss of DL and UL.

6. A Base station apparatus comprising:
a transmitting unit that signals information on preamble received target power to user equipment;
a notification unit that transmits, to the user equipment, a notification for changing a setting range of the preamble received target power, in which a plurality of power values is configured; and
a receiving unit that receives a preamble transmitted with preamble transmission power that is determined by the user equipment on a basis of the information on preamble received target power and the notification for changing the setting range.
